# EUROPEAN PATENT SPECIFICATION

(11) **EP 1 006 478 B1**
(45) Date of publication and mention of the grant of the patent: **02.11.2006**
(21) Application number: 99118897.0
(22) Date of filing: 24.09.1999
(51) Int. Cl.: G06K 19/07, G07F 7/10, G06F 12/14

(54) **IC card and data updating method for IC card**
Chipkarte und Datenaktualisierungsverfahren für eine Chipkarte
Carte à puce et procédé de mise à jour de données pour une carte à puce

(30) Priority: 01.12.1998 JP 34183898
(43) Date of publication of application: 07.06.2000
(73) Proprietor: KABUSHIKI KAISHA TOSHIBA, Kawasaki-shi, Kanagawa-ken 210-8572 (JP)
(72) Inventor: Kawaura, Atsuyoshi, Kabushiki Kaisha Toshiba, Tokyo 105-8001 (JP)
(74) Representative: Kramer - Barske - Schmidtchen

(56) References cited:
- WO-A-98/19237
- WO-A-98/52160
- FR-A- 2 701 578

## Description

The present invention relates to an IC card which incorporates an environment for executing a program on a network, such as the Internet, and which has a function of loading an application. The present invention also relates to a portable device made of such an IC card or a similar card. Further, the present invention relates to a data updating method for an IC card.

According to the prior art, the data in an IC card, an example of a portable device, are read or written under the control of a COS (Card Operating System). Since the data structure of the COS is known, the atomicity of the data updating utilizes the data structure and is therefore peculiar to the COS.

In recent years, an environment (Java) that enables execution of a program on a network (e.g., the Internet) has appeared and come into widespread use, and efforts are made to provide IC cards incorporating the application-execution environment.

In the case of an IC card incorporating the execution environment, it is desired that the application enable direct reading or writing of data and that the atomicity of the data updating be ensured. In addition, the IC card is required to have a block transaction function. Since the data structure of the application is not known to the COS, the atomicity of the data updating under the control of the application should not be dependent on the data structure; it should be of a general-purpose nature.

As described, the IC card incorporating the execution environment is required to have a block transaction function. In addition to this function, the atomicity of data updating in units of 1 byte, 2 bytes, 4 bytes and n bytes is demanded.

In order to provide a block transaction function, the notion "commit buffer" is proposed. In general, the commit buffer is realized in part of a persistent memory, such as an EEPROM. However, the EEPROM, which is a nonvolatile memory, is restricted in terms of the number of times data can be written therein, and the time required for data writing is long.

WO 98/52160 A2 discloses an IC card according to the preamble of claim 1

It discloses a system and a method of loading application data into the card's memory. The data is divided into segments that fit into an input buffer of the IC card.

FR-A-2701578 discloses an update system and method for an IC card having an EPROM. The new data is first written in a buffer portion of the EPROM. To avoid wear out of certain portions of the non-volatile memory, different portions of the non-volatile memory are used as buffer memory.

Accordingly, the object of the present invention is to provide an IC card and a data updating method for an IC card, which enable a reduction in the number of times data is written in a nonvolatile memory and which also enable general-nature atomicity management.

This object is achieved by an IC card according to claim 1 and a method according to claim 9, respectively.

Further developments of the invention are given in the dependent claims.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a schematic structure of an IC card system.
FIG. 2 is a block diagram showing the schematic structure of the IC card.
FIG. 3 shows a schematic structure of an EEPROM.
FIG. 4 shows a schematic structure of a user application area of that EEPROM.
FIG. 5 illustrates the atomicity management function in relation to a block transaction.
FIG. 6 illustrates data reading procedures and data writing procedures.
FIG. 7 is a flowchart showing how the writing operation is executed by the commit buffer management section.
FIG. 8 is a flowchart showing how the reading operation is executed by the commit buffer management section.
FIG. 9 shows a commit buffer realized in part of a RAM.
FIG. 10 shows a commit buffer realized in part of an EEPROM.
FIG. 11 is a flowchart showing how data in the commit buffer in the RAM is written in the commit buffer in the EEPROM.
FIG. 12 is a flowchart showing how a valid commit buffer is searched for when the IC card is actuated.
An embodiment of the present invention will now be described with reference to the accompanying drawings.

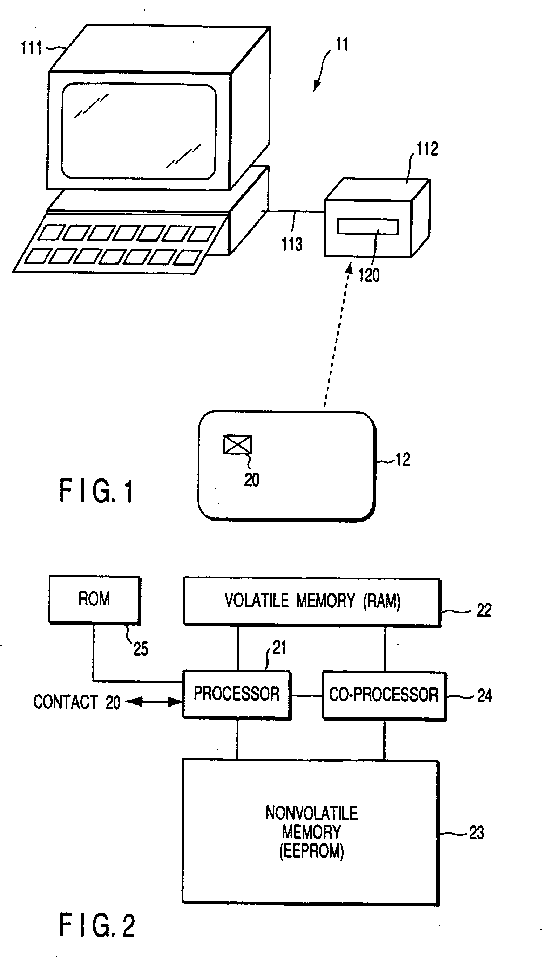

FIG. 1 shows a schematic structure of an IC card system.

As shown in FIG. 1, the IC card system comprises a terminal device 11 and an IC card 12. The terminal device 11 is made up of an operation unit 111 for executing an operation and receiving inputs entered by an operator, and a reader/writer 112 for reading data from the IC card 12 and writing data therein. The operation unit 111 and the reader/writer 112 are connected together by a line 113.

The operation unit 111 is provided with a processor for executing an operation. It is also provided with input means which includes a human-system interface and from which external signals are entered. The input means processes a request made to the IC card 12, and also processes a result status.

The reader/writer 112 receives a request sent from the operation unit 111, and sends that request to the IC card 12 inserted in a card insertion slot 120. Likewise, the reader/writer 112 receives a status signal from the IC card 12 and informs the operation unit 111 of the status of the IC card 12.

As shown in FIGS. 1 and 2, the IC card 12 comprises: a contact 20 which is to be connected to an external apparatus when the IC card 12 serves as a portable device; a processor 21 for executing an operation and control; a volatile memory (RAM) 22 for temporarily storing data; a nonvolatile memory (EEPROM) 23 for permanently storing data; a coprocessor 24 serving as an auxiliary processor; and a ROM 25 for storing a virtual machine for interpreting a card domain, based on which a card operating system (COS) and an application are loaded or installed, and for further interpreting a byte code of the application. The IC card 12 performs communication with the reader/writer 112 by way of the contact 20. The nonvolatile memory 23 may be made of a flash memory, an FRAM, or the like.

The processor 21 comprises a card applette CAP used for converting the application loaded from the terminal device 11 into data that can be used by the IC card 12.

Under the control of the processor 21, two types of memories, namely the volatile memory 22 and the nonvolatile memory 23, are managed. The coprocessor 24 described above is used when an operation that imposes a heavy load is executed. The coprocessor 24 executes the operation on the basis of instructions from the processor 21.

Input data to the IC card 12 is entered by way of the contact 20 shown in FIG. 1, and normally it is stored in the RAM 22. The data, thus received, is analyzed and processed by the processor 21. If the data must be stored, it is written in the EEPROM 23 on the basis of instructions from the processor 21. If a special kind of operation is required, instructions for executing that operation are sent to the coprocessor 24. When the amount of data is too large to be stored in the RAM 22, part of the EEPROM 23 can be used for temporarily storing the excessive data.

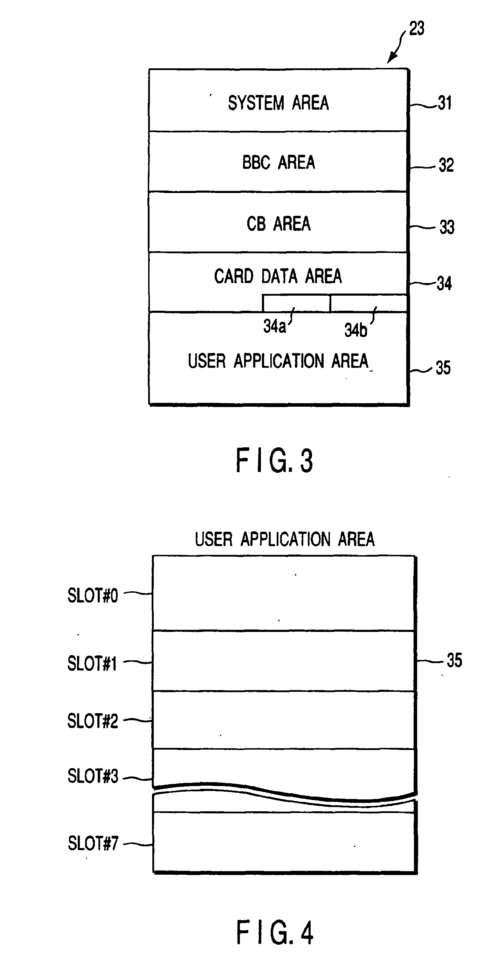

As shown in FIGS. 3 and 4, the EEPROM 23 comprises: a system area 31 for storing a card ID, etc.; a BCC area 32 for area checking; a CB area 33 serving as a commit buffer area; a card data area 34 in which a slot management table 34a used for the management of slots and a shared table 34b indicating execution-permitted states among the application are stored; and a user application area 35 made up of a plurality of slots in each of which an application can be recorded. The BCC area 32 is used for determining whether correct data have been recorded in the card data area 34 and the user application area 35.

As shown in FIG. 4, the user application area 35 is made up of eight slots #0 to #7, and a user application is recorded in each of these slots.

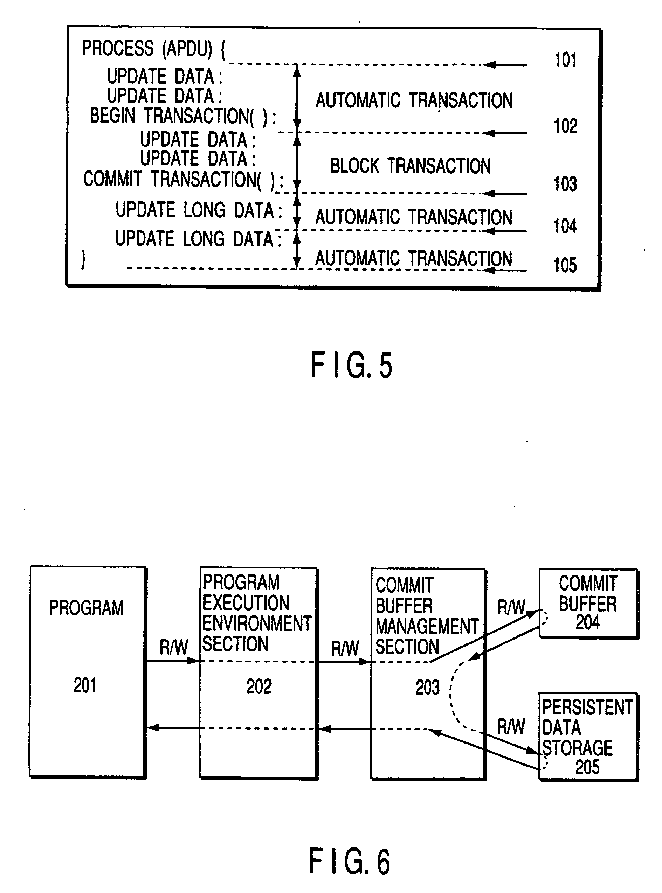

The atomicity management function will be described in relation to a block transaction, referring to the program shown in FIG. 5.

The COS automatically starts a transaction after "C-APDU" is received from the terminal device 11.

The transaction is automatically brought to an end before "R-APDU" is sent to the terminal device 11.

During the period in which the COS is operating, the terminal device is constantly in the chain transaction state.

The synchronization points at which transactions are synchronized are as follows:
(1) the time (102) at which the user starts a block transaction;
(2) the time (103) at which the user stops the block transaction;
(3) the time (104) at which the commit buffer is detected as being about to overflow at the next data updating; and
(4) the time (105) at which it is detected that the method called for by the user requires reflection of what is stored in the commit buffer.

FIG. 6 illustrates data reading procedures and data writing procedures. Referring to FIG. 6, the processor 21 reads out a program 201 from a ROM 25, and the readout program 201 is executed by a program execution environment section 202. A commit buffer 204 (buffer region) is controlled by a commit buffer management section 203, and the readout program 201 is written or read from a persistent data storage 205. According to this embodiment, the commit buffer 204 is provided not only in the EEPROM 23 but also in the RAM 22. The persistent data storage 205 is provided in the user application area 35 of the EEPROM 23.

A description will now be given as to how the program executes data reading, with reference to FIG. 6.

Let us assume that the program 201 requires the program execution environment section 202 to execute data reading. In this case, the program execution environment section 202 requests that the commit buffer management section 203 execute data reading. In response to this request, the program execution environment section 202 designates the address and data length of the data to be read out, and informs the commit buffer management section 203 of the designated address and data length so that the commit buffer management section 203 can execute data reading.

The commit buffer management section 203 first reads data from the commit buffer 204, and then read data from the persistent data storage 205. Values, thus read out, are supplied to the program execution environment section 202. The program execution environment section 202 sends the readout values to the program 201.

A description will now be given as to how the program executes data writing, with reference to FIG. 6.

Let us assume that the program 201 requires the program execution environment section 202 to execute data writing. In this case, the program execution environment section 202 requests that the commit buffer management section 203 execute data writing. In response to this request, the program execution environment section 202 designates the address, value and data length of the data to be written, and informs the commit buffer management section 203 of the designated address, value and data length so that the commit buffer management section 203 can execute data writing.

The commit buffer management section 203 first writes data in the commit buffer 204, and then writes data in the persistent data storage 205.

The program execution environment section 202 can know the number of bytes constituting the data that has to be read or written in response to the request made by the program 201. When the data is to be updated, the program execution environment section 202 informs the commit buffer management section 203 of the number of data items to be updated. The commit buffer management section 203 executes synchronization point processing if the commit buffer 204 is about to overflow.

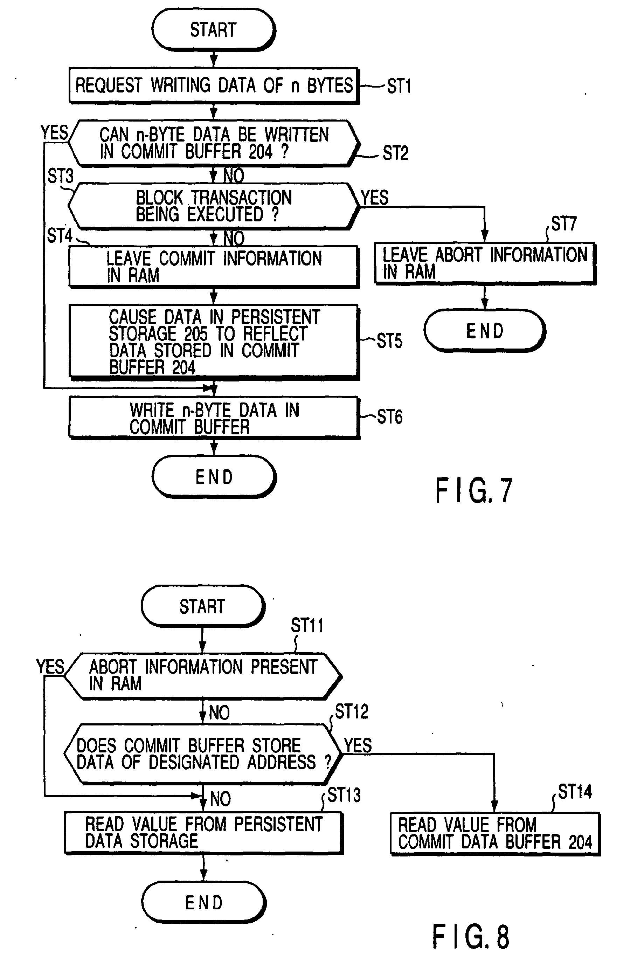

The writing operation performed by the commit buffer management section 203 will be described with reference to the flowchart shown in FIG. 7.

First, a request for writing n-byte data is made (ST1). When that request is made, a check is made to see whether or not the n-byte data can be written in the commit buffer 204 (ST2). If the n-byte data cannot be written in the commit buffer 204, a check is made to see whether or not a block transaction is being executed. If the block transaction is not executed then, commit information is left in the RAM 22 (ST4), and the data in the persistent storage 205 is made to reflect the data stored in the commit buffer 204 (ST5). To be more specific, the data in the commit buffer 204 is written in a free area of the persistent storage 205, or the data already recorded in the persistent storage 205 is overwritten with the data in the commit buffer 204. After the commit buffer 204 has a free area, the n-byte data is written in the commit buffer 204 (ST6).

If the check in step ST2 shows that the n-byte data can be written in the commit buffer 204, the flow advances to step ST6, so as to write the n-byte data in the commit buffer 204.

If, in step ST3, the block transaction is detected as being executed, abort information is left in the RAM 22 (ST7), and the processing is brought to an end.

The reading operation performed by the commit buffer management section 203 will be described with reference to the flowchart shown in FIG. 8.

First of all, a check is made to see whether or not the abort information is present in the RAM 22 (ST11). If the abort information is not present, a check is executed to see whether or not the commit buffer 204 stores the data (AI) of the designated address (ST12). If the data (AI) of the designated address is not present, a value is read from the persistent data storage 205 (ST13).

If the check in step ST11 shows that the abort information is present in the RAM 22, the flow advances to step ST13, so as to read a value from the persistent data storage 205 (ST13).

If step ST12 shows that the data of the designated address is present in the commit buffer 204, a value is read from the commit buffer 204 (ST14).

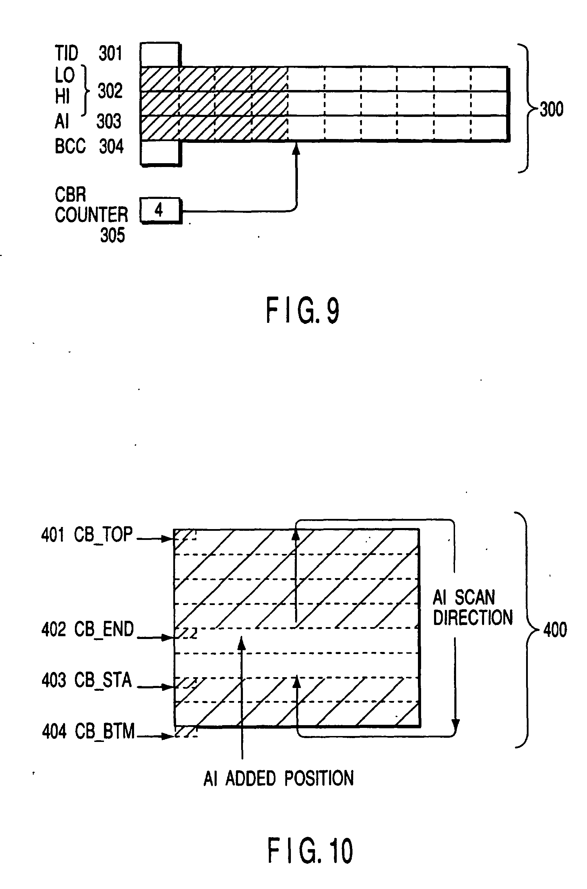

Next, a description will be given of the control of the commit buffer 204 with reference to FIGS. 9 and 10. The commit buffer 204 is made up of a commit buffer 300 of FIG. 9 provided in the RAM 22, and a commit buffer 400 of FIG. 10 provided in the EEPROM 23.

The commit buffer 30 of the RAM 22 of FIG. 9 comprises a TID area 301, an address information area 302, an after-image area (to be abbreviated as an AI area) 303, and a BCC (byte check) area 304. The address information area 302 and the AI area 303 constitute one pair, and the commit buffer 300 provided in the RAM 22 is comprised of n pairs of them. The number of pairs registered is stored in the CBR counter 305 of the RAM 22.

The commit buffer 400 provided in the EEPROM 23 shown in FIG. 10 is comprised m segments, each being similar in structure to the commit buffer 300 provided in the RAM 22. The start of the commit buffer 400 of the EEPROM 23 is a CB_TOP 401, and the terminating end of the commit buffer 400 is CB_BTM 404. CB_STA 403 indicates the position from which the present transaction uses the commit buffer 204 of the EEPROM 22, and CB_END 402 indicates the position from which the present transaction will use the commit buffer 204 of the EEPROM 22 next time. The commit buffer 400 is an area defined by the CB_STA 403 and the CB_END 402.

Data is written in the commit buffer 300 of the RAM 22 in such a manner that the same data is written in the commit buffer 400 of the EEPROM 23. In other words, the commit buffer 300 of the RAM 22 is designed to correspond to the first page of the commit buffer 400 of the EEPROM 23. The commit buffer 400 is used by the present transaction in such a manner that the used area circulates from the CB_TOP 401 to the CB_BTM 404. Likewise, the CB_STA 403 and CB_END 402 circulate from the CB-TOP 401 to the CB_BTM 404.

A description will be given as to how data is read from the designated address, referring to FIGS. 9 and 10.

The commit buffer management section 203 obtains data values by following the procedures (1)-(3) below.
(1) First, a check is made to see whether or not the commit buffer 300 of the RAM 22 stores data of the designated address. If the data is present, AI is sent back.
(2) Then, a check is made to see whether or not the commit buffer 400 of the EEPROM 23 stores data of the designated address. If the data is present, AI is sent back.
(3) The data stored at the designated address of the EEPROM 23 is sent back.

A detailed description will be given as to how data is read from the designated address, referring to FIGS. 6, 9 and 10.

The commit buffer management section 203 writes data by following the procedures (1)-(3) below.
(1) The commit buffer 300 of the RAM 203 is made to reflect updated information.
(2) If data overflows from the commit buffer 300 of the RAM 22, the data to be stored in that commit buffer 300 is recorded in the commit buffer 400 of the EEPROM 23.
(3) If data overflows from the commit buffer 400 of the EEPROM 23, then data to be stored in that commit buffer is recorded in the persistent data storage 205.

If a request is made for the commit of a block transaction or for the atomic data updating, the procedures (1)-(3) are executed without reference to the overflow.

A description will now be given of an effective structure for a commit buffer and of a manner in which detection is performed.

The MSB of the TID area serves as a terminating buffer at which a transaction ends in the commit buffer. The commit buffer 400 of the EEPPROM 23 corresponds to m pages of the commit buffer 300 of the ROM 22 and is a circulation type. If the commit buffer 300 of the RAM 22 overflows, the data that cannot be stored therein is recorded on the page provided in the EEPROM 23 and indicated by the CB_END 402. Simultaneous with this, the data in the CB_END 402 is updated to indicate the next page.

The data presently stored in the commit buffer are represented by [CB_STA 403 - CB_END 402), wherein the bracket "[" represents either "more than or equal to" or "less than or equal to", and wherein the parenthesis ")" represents "below."

When the processing proceeds to a synchronization point, data is written on the page corresponding to the commit terminating flag of the TID. Subsequently, TID is incremented by "1". TID circulates in such a manner that its value is far larger than the number of pages provided in the commit buffer of the EEPROM 23.

If the IC card 12 is pulled out from the slot 120, the commit buffer 400 of the EEPROM 23 is inspected when the IC card 12 is actuated next. More specifically, a page is searched for if the corresponding terminating flag of the TID 301 is set in the commit buffer 400 of the EEPROM 23. If the TID corresponding to the next page is not "TID+1", the commit buffer management section 203 determines that the EEPROM 23 includes a valid commit buffer whose data is not saved. Based on this determination, the actual EEPROM 205 is made to reflect the data stored in the EEPROM commit buffer 204 having the TID in question (roll forward). If no valid commit buffer exists, the actual EEPROM 205 is not subjected to the data reflection (roll back).

Before the transmission of "R-APDU", the commit buffer management section 203 writes a page that is likely to be regarded as invalid in the commit buffer 400 of the EEPROM 23. This prevents useless occurrence of roll forward.

A structure for a commit buffer has been described, along with a processing method used for the commit buffer. By putting the commit buffer and the processing method to practice, it is possible to reduce the number of times data is written in the EEPROM 23. In addition, the EEPROM commit buffer can be used in a uniform manner.

The commit buffer shown in FIG. 6 is particularly advantageous when a CPU enabling a fast string search is adopted. That is, an address scan can be performed at high speed, and the data at a designated address can be easily searched.

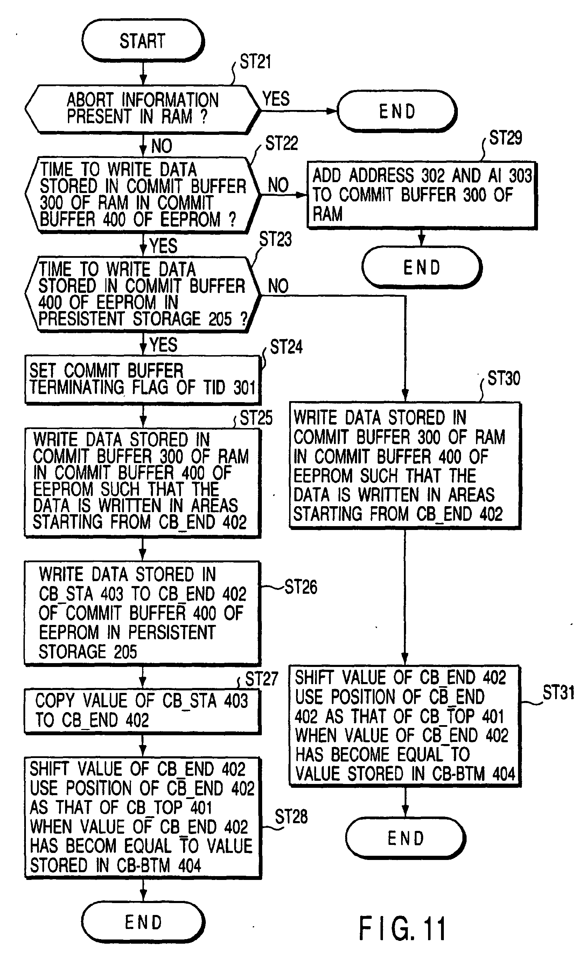

The operation for recording the data stored in the commit buffer 300 of the RAM 22 in the commit buffer 400 of the EEPROM 23 will be described with reference to the flowchart in FIG. 11.

First of all, the commit buffer management section 203 executes a check to see whether or not abort information is present in the RAM 22 (ST21). If the abort information is present, the processing is brought to an end. If no abort information is present, a check is made to see whether or not it is time to write the data stored in the commit buffer 300 of the RAM 22 in the commit buffer 400 of the EEPROM 23 (ST22). If it is, a check is made to see whether or not it is time to write the data stored in the commit buffer 400 of the EEPROM 23 in the persistent storage 205 (ST23). If it is, the commit buffer terminating flag of the TID 301 is set (ST24).

The data in the commit buffer 300 of the RAM 22 is recorded in the commit buffer 400 of the EEPROM 23 in such a manner that the data is first written in the areas starting from CB_END 402 (ST25).

The data stored in the CB_STA 403 to CB_END 402 of the commit buffer 400 of the EEPROM 23 is recorded in the persistent storage 205 (ST26).

Subsequently, the value of the CB_STA 403 is copied to the CB_END 402 (ST27). The value of the CB_END 402 is shifted in this manner until it becomes equal to the value stored in the CB-BTM 404. When the value of the CB_END 402 has become equal to the value stored in the CB-BTM 404, the processing is brought to an end in a state where CB_END 402 correspond in position to CB_TOP 401 (ST28).

If step ST22 shows that it is not the time for data writing, an address 302 and an AI 303 are added to the commit buffer 300 of the RAM 22 (ST 29), and the processing is brought to an end.

If step ST23 shows that it is not the time for data writing, the data in the commit buffer 300 of the RAM 22 is recorded in the commit buffer 400 of the EEPROM 23 in such a manner that the data is first written in the areas starting from CB_END 402 (ST30). The value of the CB_END 402 is shifted in this manner until it becomes equal to the value stored in the CB-BTM 404. When the value of the CB_END 402 has become equal to the value stored in the CB-BTM 404, the processing is brought to an end in a state where CB_END 402 correspond in position to CB_TOP 401 (ST31).

As described above, a check is made in step ST22 to see whether or not it is time to write the data stored in the commit buffer 300 of the RAM 22 in the commit buffer 400 of the EEPROM 23. The times when the data write operation referred to in step ST22 is started are a time at which the commit buffer 300 of the RAM 22 is considered to overflow when data write operation is executed next, and a time which is immediately before or after the start of a block transaction.

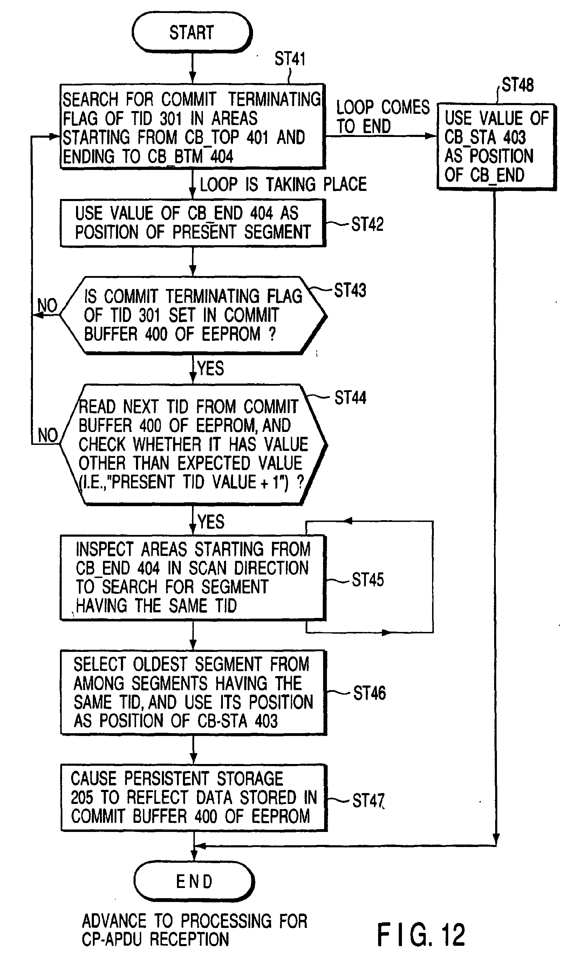

The operation for searching for a valid commit buffer when the IC card is actuated will be described with reference to the flowchart shown in FIG. 12.

First of all, the commit terminating flag of the TID 301 is searched for in the areas starting from CB_TOP 401 and ending to CB_BTM 404 (ST41). If the loop is taking place, the value of the CB_END 404 is used as the position of the present segment (ST42), and a check is made to see whether or not the commit terminating flag of the TID 301 is set in the commit buffer 400 of the EEPROM 23 (ST43). If the commit terminating flag is not set, the flow returns to step ST41. If it is set, the next TID is read from the commit buffer 400 of the EEPROM 23 and a check is made to see whether or not the TID has a value other than the expected value (i.e., "Present TID Value + 1") (ST44). If the TID has the expected value, the flow returns to step ST41; if it does not, the areas starting from CB_END 404 is inspected in the AI scan direction to search for a segment having the same TID (ST45).

Of the segments having the same TID, the oldest one is used as the CB-STA 403 (ST46). Subsequently, the persistent storage 205 is made to reflect the data stored in the commit buffer 400 of the EEPROM 23 (ST47).

If, in step ST41, the commit terminating flag is searched for and the loop is detected as having come to an end, the value of the CB_STA 403 is used as the position of the CB_END 402 (ST48).

After the end of either step ST47 or step ST48, the flow is brought to an end, and subsequently the processing for the CP-APDU reception is executed.

As described above, according to the present invention, the atomicity of data updating is ensured at all times even when the device is operating.

Since data are written in the commit buffer in a uniform manner, the persistent data storage can withstand write operations executed a large number of times.

In addition, the volume efficiency of the commit buffer of the persistent data storage can be enhanced per page, and the persistent data storage can withstand write operations performed a large number of times, and the number of times data must be written in the persistent data storage can be reduced.

Moreover, a number of commit buffer pages in the persistent register can be used to select a valid commit buffer, and data is prevented from being written concentratedly in a particular area of the persistent storage.

The time required for reading data from the commit buffer can be as short as possible. The data read time can be remarkably short when no target data is found. The data read time can be also short to a certain extent when target data is found.

The above embodiment was described, referring to an IC card. However, the present invention is applicable not only to the IC card but also to a portable device having a similar structure.

## Claims

1. An IC card (12) including a volatile memory (22) and a nonvolatile memory (23) and having a function of loading an application in the nonvolatile memory (23), **characterized by** setting means (21)adapted for setting a buffer region in both the volatile memory (22) and the nonvolatile memory (23); and
processing means (21) adapted for performing chain processing between request communication and response communication which use the buffer region set by the setting means,
said setting means (21) divides the buffer region in both the volatile memory (22) and the non-volatile memory (23) into divisional areas each divisional area having a predetermined capacity, the nonvolatile memory (23) including a plurality of the divisional areas, and performs control so as to use the divisional areas in the nonvolatile memory (23) in a circulatory manner, when data are written from the divisional area of the volatile memory into the nonvolatile memory (23).

2. An IC card (12) according to claim 1, **characterized in that** said setting means (21) controls a data updating operation using the buffer region of the nonvolatile memory (23), such that the data updating operation reflects data stored in the buffer region of the volatile memory (22).

3. An IC card (12) according to claim 1 or 2, **characterized in that** said setting means (21) attaches identification information to the buffer region, and performs control such that used areas of the buffer region circulate based on the identification information.

4. An IC card (12) according to one of claims 1 to 3, **characterized in that** said setting means (21) divides one constituent unit, used in the buffer region, into divisions, and controls the buffer region based on the divisions.

5. The IC card according to one of claims 1 to 4, further comprising
a persistent data storage (205), provided in the nonvolatile memory (23), for enabling write and
read operations of data, and
memory means (25) for storing a program (201)
wherein the processing means comprises
execution means (202) for executing the program stored in the memory means, and
management means (203) for managing the write and read operations of data with reference to the persistent data storage by using the buffer region, in accordance with the program executed by the execution means.

6. The IC card according to one of claims 1 to 5, **characterized in that** said nonvolatile memory (23) is an EEPROM for permanently storing data.

7. The IC card according to one of claims 1 to 6, **characterized in that** said volatile memory (22) is a RAM for temporarily storing data.

8. The IC card according to one of claims 5 to 7, **characterized in that** said memory means (25) is a ROM for storing a virtual machine for interpreting a card domain, based on which a card operating system (COS) and an application are loaded or installed, and for interpreting a byte code of the application.

9. A data updating method for an IC card (12) which includes a volatile memory (22) and a nonvolatile memory (23) and has a function of loading an application in the nonvolatile memory (23), said data updating method comprising the steps of:
providing a buffer region in both the volatile memory (22) and the nonvolatile memory (23); and
performing chain processing between request communication and response communication which use the buffer region,
wherein the buffer region in both volatile memory (22) and the non-volatile memory (23) is divided into divisional areas each divisional area having a predetermined capacity, the nonvolatile memory (23) including a plurality of the divisional areas, and control is performed so as to use the divisional areas in the nonvolatile memory (23) in a circulatory manner, when data are written from the divisional area of the volatile memory into the non-volatile memory (23).

10. A data updating method according to claim 9, in which a data updating operation is controlled using the buffer region of the volatile memory (22), such that a data updating operation reflects data stored in the buffer region of the volatile memory (22).

11. A data updating method according to claim 9 or 10, in which identification information is attached to the buffer region, and control is performed such that used areas of the buffer region circulate based on the identification information.

12. A data updating method according to one of claims 9 to 11, in which one constituent unit, used in the buffer region, is divided into divisions.

## Patentansprüche

1. IC-Karte (12), die einen flüchtigen Speicher (22) und einen nicht flüchtigen Speicher (23) enthält, und die eine Funktion zum Laden einer Anwendung in den nicht flüchtigen Speicher (23) aufweist, **gekennzeichnet durch** ein Einstellungsmittel (21), das ausgelegt ist zum Einstellen einer Pufferregion in beiden, dem flüchtigen Speicher (22) und dem nicht flüchtigen Speicher (23), und
ein Verarbeitungsmittel (21), das ausgelegt ist zum Durchführen einer Kettenverarbeitung zwischen einer Anfragekommunikation und einer Antwortkommunikation, die die Pufferregion verwenden, die **durch** das Einstellungsmittel eingestellt worden ist, wobei
das Einstellungsmittel (21) die Pufferregion in beiden, dem flüchtigen Speicher (22) und dem nicht flüchtigem Speicher (23) in Teilbereiche teilt, wobei jeder Teilbereich eine vorbestimmte Kapazität hat, der nicht flüchtige Speicher (23) eine Mehrzahl der Teilbereiche enthält, und eine Steuerung durchführt, um die Teilbereiche in dem nicht flüchtigem Speicher (23) in einer zirkulatorischen Art und Weise zu verwenden, wenn Daten von dem Teilbereich des flüchtigen Speichers in den nicht flüchtigen Speicher (23) geschrieben werden.

2. IC-Karte (12) nach Anspruch 1, **dadurch gekennzeichnet, dass** das Einstellungsmittel (21) einen Datenaktualisierungsbetrieb steuert unter Verwendung der Pufferregion des nicht flüchtigen Speichers (23), derart, dass der Datenaktualisierungsbetrieb die Daten reflektiert, die in der Pufferregion des flüchtigen Speichers (22) gespeichert sind.

3. IC-Karte (12) nach Anspruch 1 oder 2, **dadurch gekennzeichnet, dass** das Einstellungsmittel (21) Identifikationsinformation der Pufferregion hinzufügt, und eine Steuerung derart durchführt, dass verwendete Bereiche der Pufferregion basierend auf der Identifikationsinformation zirkulieren.

4. IC-Karte (12) nach einem der Ansprüche 1 bis 3, **dadurch gekennzeichnet, dass** das Einstellungsmittel (21) eine Komponenteneinheit, die in der Pufferregion verwendet wird, in Teile unterteilt, und die Pufferregion basierend auf den Teilen steuert.

5. IC-Karte nach einem der Ansprüche 1 bis 4, ferner mit
einem persistenten Datenspeicher (205), der in dem nicht flüchtigen Speicher (23) bereitgestellt ist, zur Ermöglichung einer Schreib- und Leseoperation der Daten, und
einem Speichermittel (25) zum Speichern eines Programms (201),
wobei der Verarbeitungsmittel ein Ausführungsmittel (202) zum Ausführen des in dem Speichermittel gespeicherten Programms und ein Managementmittel (203) enthält zum Managen der Schreib- und Leseoperation der Daten unter Bezugnahme auf den persistenten Datenspeicher, indem die Pufferregion verwendet wird, in Übereinstimmung mit dem Programm, das durch das Ausführungsmittel ausgeführt wird.

6. IC-Karte (12) nach einem der Ansprüche 1 bis 5, **dadurch gekennzeichnet, dass** der nicht flüchtige Speicher (23) ein EEPROM ist zum permanenten Speichern von Daten.

7. IC-Karte (12) nach einem der Ansprüche 1 bis 6, **dadurch gekennzeichnet, dass** der flüchtige Speicher (22) ein RAM ist zum vorübergehenden Speichern von Daten.

8. IC-Karte (12) gemäß einem der Ansprüche 5 bis 7, **dadurch gekennzeichnet, dass** das Speichermittel (25) ein ROM ist zum Speichern einer virtuellen Maschine zum Interpretieren eines Kartenbereichs basierend darauf, welches Kartenbetriebssystem (COS) und welche Anwendung geladen oder installiert sind, und zum Interpretieren eines Byte-Kodes der Anwendung.

9. Datenaktualisierungsverfahren für eine IC-Karte (12), die einen flüchtigen Speicher (22) und einen nicht flüchtigen Speicher (23) enthält, und die eine Funktion zum Laden einer Anwendung in den nicht flüchtigen Speicher (23) aufweist, wobei das Datenaktualisierungsverfahren die Schritte enthält:
Bereitstellen einer Pufferregion in beiden, dem flüchtigen Speicher (22) und dem nicht flüchtigen Speicher (23); und
Ausführen einer Kettenverarbeitung zwischen einer Anfragekommunikation und einer Antwortkommunikation, die die Pufferregion verwenden, wobei
die Pufferregion in beiden, dem flüchtigen Speicher (22) und dem nicht flüchtigen Speicher (23) in Teilbereiche geteilt ist, wobei jeder Teilbereich eine vorbestimmte Kapazität hat, der nicht flüchtige Speicher (23) eine Mehrzahl von Teilbereichen enthält, und eine Steuerung durchgeführt wird, um die Teilbereiche in dem nicht flüchtigem Speicher (23) in einer zirkulatorischen Art und Weise von dem Teilbereich des flüchtigen Speicher (22) zu verwenden, wenn Daten in den nicht flüchtigen Speicher (23) geschrieben werden.

10. Datenaktualisierungsverfahren nach Anspruch 9, bei dem ein Datenaktualisierungsbetrieb gesteuert wird unter Verwendung der Pufferregion des flüchtigen Speicher (22) derart, dass ein Datenaktualisierungsbetrieb Daten reflektiert, die in der Pufferregion des flüchtigen Speicher (22) gespeichert sind.

11. Datenaktualisierungsverfahren nach Anspruch 9 oder 10, bei dem Identifikationsinformation der Pufferregion hinzugefügt wird, und die Steuerung derart durchgeführt wird, dass verwendete Bereiche der Pufferregion zirkulieren basierend auf der Identifikationsinformation.

12. Datenaktualisierungsverfahren nach einem der Ansprüche 9 bis 11, bei dem eine Komponenteneinheit, die in der Pufferregion verwendet wird, in Bereiche unterteilt wird.

## Revendications

1. Carte à circuit intégré (12) comprenant une mémoire volatile (22) et une mémoire non volatile (23) et ayant une fonction de chargement d'une application dans la mémoire non volatile (23), **caractérisée par** un moyen de configuration (21) adapté pour configurer une région de mémoire tampon à la fois dans la mémoire volatile (22) et dans la mémoire non volatile (23), et
par un moyen de traitement (21) adapté pour exécuter le traitement de chaîne entre la communication de requête et la communication de réponse qui utilisent la région de mémoire tampon configurée par le moyen de configuration, ledit moyen de configuration (21) divise la région de la mémoire tampon à la fois dans la mémoire volatile (22) et dans la mémoire non volatile (23) en zones divisionnaires, chaque zone divisionnaire ayant une capacité prédéterminée, la mémoire non volatile (23) incluant une pluralité de zones divisionnaires, et exécute un contrôle pour utiliser les zones divisionnaires dans la mémoire non volatile (23) d'une manière circulatoire, lorsque les données sont écrites de la zone divisionnaire de la mémoire volatile dans la mémoire non volatile (23).

2. Carte à circuit intégré (12) selon la revendication 1, **caractérisée en ce que** ledit moyen de configuration (21) contrôle une opération de mise à jour des données à l'aide de la région de mémoire tampon de la mémoire non volatile (23), de sorte que l'opération de mise à jour des données reflète les données stockées dans la région de mémoire tampon de la mémoire volatile (22).

3. Carte à circuit intégré (12) selon la revendication 1 ou 2, **caractérisée en ce que** ledit moyen de configuration (21) attache des informations d'identification à la région de mémoire tampon et exécute un contrôle de sorte que les zones utilisées de la région de mémoire tampon circulent en fonction des informations d'identification.

4. Carte à circuit intégré (12) selon l'une quelconque des revendications 1 à 3, **caractérisée en ce que** le moyen de configuration (21) divise une unité constituante, utilisée dans la région de mémoire tampon, en divisions, et contrôle la région de mémoire tampon en fonction des divisions.

5. Carte à circuit intégré selon l'une quelconque des revendications 1 à 4, comprenant en outre un stockage de données permanent (205), fourni dans la mémoire non volatile (23), pour permettre des opérations d'écriture et de lecture de données, et un moyen de mémoire (25) pour stocker un programme (201), dans lequel le moyen de traitement comprend un moyen d'exécution (202) pour exécuter le programme stocké dans le moyen de mémoire, et un moyen de gestion (203) pour gérer les opérations d'écriture et de lecture des données avec référence au stockage de données permanent à l'aide de la région de mémoire tampon, conformément au programme exécuté par le moyen d'exécution.

6. Carte à circuit intégré selon l'une quelconque des revendications 1 à 5, **caractérisée en ce que** ladite mémoire non volatile (23) est une mémoire EEPROM pour les données stockées de façon permanente.

7. Carte à circuit intégré selon l'une quelconque des revendications 1 à 6, **caractérisée en ce que** ladite mémoire volatile (22) est une mémoire RAM pour les données stockées de façon temporaire.

8. Carte à circuit intégré selon l'une quelconque des revendications 5 à 7, **caractérisée en ce que** ledit moyen de mémoire (25) est une mémoire morte pour stocker une machine virtuelle pour interpréter un domaine de carte, en fonction duquel un système d'exploitation de carte (COS) et une application sont chargés ou installés, et pour interpréter un code mobile de l'application.

9. Procédé de mise à jour de données pour une carte à circuit intégré (12) qui inclut une mémoire volatile (22) et une mémoire non volatile (23) et a une fonction de chargement d'une application dans la mémoire non volatile (23), ledit procédé de mise à jour de données comprenant les étapes consistant à :
fournir une région de mémoire tampon à la fois dans la mémoire volatile (22) et dans la mémoire non volatile (23) ; et exécuter un traitement de chaîne entre la communication de requête et la communication de réponse qui utilise la région de mémoire tampon, dans lequel la région de mémoire tampon à la fois dans la mémoire volatile (22) et dans la mémoire non volatile (23) est divisée en zones divisionnaires, chaque zone divisionnaires ayant une capacité prédéterminée, la mémoire non volatile (23) incluant une pluralité de zones divisionnaires, et un contrôle est exécuté pour utiliser les zones divisionnaires dans la mémoire non volatile (23) d'une manière circulatoire, lorsque les données sont écrites de la zone divisionnaire de la mémoire volatile dans la mémoire non volatile (23).

10. Procédé de mise à jour de données selon la revendication 9, dans lequel l'opération de mise à jour des données est contrôlée à l'aide de la région de mémoire tampon de la mémoire volatile (22), de sorte que l'opération de mise à jour des données reflète les données stockées dans la région de mémoire tampon de la mémoire volatile (22).

11. Procédé de mise à jour de données selon la revendication 9 ou 10, dans lequel les informations d'identification sont attachées à la région de mémoire tampon et un contrôle est exécuté de sorte que les zones utilisées de la région de mémoire tampon circulent en fonction des informations d'identification.

12. Procédé de mise à jour de données selon l'une quelconque des revendications 9 à 11, dans lequel une unité constituante, utilisée dans la région de mémoire tampon, est divisée en divisions.
